# EUROPEAN PATENT APPLICATION

(11) **EP 2 056 297 A1**
(43) Date of publication of application: **06.05.2009**
(21) Application number: 08163264.8
(22) Date of filing: 29.08.2008
(51) Int. Cl.: G11B 5/596

(54) **Clock generating apparatus, magnetic disk apparatus, and write synchronization method**

(30) Priority: 05.11.2007 JP 2007287893
(71) Applicant: Fujitsu Ltd., Kawasaki-shi, Kanagawa 211-8588 (JP)
(72) Inventor: Itakura, Akihiro, Kawasaki-shi, Kanagawa 211-8588 (JP)
(74) Representative: Wilding, Frances Ward

(57) **Abstract**

A recording apparatus detects a preamble, which is a series of patterns formed on a track, and generates a clock based on the preamble. The recording apparatus then detects a Sync mark, which is a predetermined pattern formed between the preamble and a Resync mark, calculates a predicted position of the next Resync, and switches PLL gain to a low level. The recording apparatus then detects the Resync mark, which is a pattern of equal to or more than one pulse, and corrects the generated clock. Specifically, upon detecting the Resync mark, the recording apparatus compares a timing of the predicted position of the Resync, and the timing at which the Resync mark is actually detected to correct a write clock.

## Description

### BACKGROUND OF THE INVENTION

### 1. Field of the Invention

The present invention relates to a clock generating apparatus for generating a clock in synchronization with a timing at which a head comes above magnetized areas arranged isolated from each other on a track of a magnetic disk for reproducing a record, a magnetic disk apparatus, and a write synchronization method.

### 2. Description of the Related Art

Recently, patterned media recording is attracting attentions as a technology for increasing a density of a magnetic disk. On a disk using such patterned media recording, a plurality of island-like magnetized areas isolated from each other (hereinafter, referred to as "land(s)" as appropriate) is formed for reproducing records. Upon recording a piece of data onto such a patterned media recording disk, a magnetic field is generated in a land, which is formed on the disk, at timing when a head comes above the land. Thus, a clock needs to be generated in synchronization with the timing at which the head comes above the magnetized area.

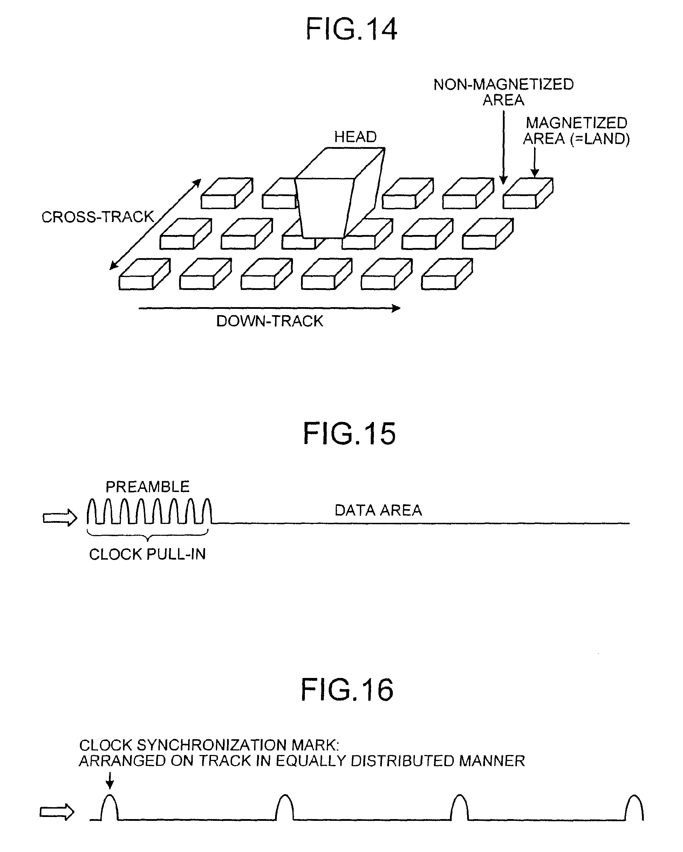

Specifically, one conventional recording apparatus technology is shown in Fig. 15. In this technology, a preamble, which is a series of patterns, is arranged at the beginning of a sector of a track on the disk. Upon recording a piece of data in such a recording apparatus, the preamble is detected, and a clock is generated based on the detection of the preambles (see Japanese Patent Application Laid-open Numbers 2000-48352 and 2004-199806).

Another conventional recording apparatus technology is shown in Fig. 16. In this technology, clock synchronization marks are arranged on the track of a disk in an equally distributed manner. Upon recording a piece of data in such a recording apparatus, a synchronization signal is read out from each of the clock synchronization marks, and the read synchronization signal is synchronized with a timing clock signal for writing data (see Japanese Patent Application Laid-open Number 2003-157507).

In the technology in which the preambles are arranged on a track, the clocks are generated based on the preambles arranged at the beginning of the sectors. Therefore, if the frequency changes within a sector, for example due to decentering, after the clock is generated, an error might occur toward the end of the sector, thus preventing a highly precise synchronization to be achieved.

Furthermore, in the technology using the clock synchronizing marks described above, because the synchronization signals are read out from a plurality of clock synchronization marks and synchronized with the timing clock signal for writing data, it requires time to achieve the synchronization.

### SUMMARY

It is desirable to at least partially solve the problems in the conventional technology.

According to an embodiment of one aspect of the present invention, a clock generating apparatus generating a clock in synchronization with a timing at which a head comes above magnetized areas arranged isolated from each other on a track of a magnetic disk for reproducing a record, includes: a clock generating unit that detects a series of patterns formed on the track, and generates the clock based on the series of patterns; and a clock correcting unit that detects a pattern of one or more pulse formed on the track in predetermined intervals, and corrects the clock generated by the clock generating unit, based on the pattern of one or more pulse. According to an embodiment of another aspect of the present invention, a magnetic disk apparatus generating a clock in synchronization with a timing at which a head comes above magnetized areas arranged isolated from each other on a track of a magnetic disk for reproducing a record, includes: a clock generating unit that detects a series of patterns formed on the track, and generates the clock based on the series of patterns; and a clock correcting unit that detects a pattern of one or more pulse formed on the track in predetermined intervals, and corrects the clock generated by the clock generating unit, based on the pattern of one or more pulse.

According to still another embodiment of an aspect of the present invention, a write synchronization method for synchronizing a timing at which a head comes above magnetized areas arranged isolated from each other on a track of a magnetic disk for reproducing a record, includes: firstly detecting a series of patterns formed on the track to generate the clock based on the series of patterns; and secondly detecting a pattern of one or more pulse formed on the track in predetermined intervals to correct the clock generated in the firstly detecting based on the pattern of one or more pulse.

The above and other desirable features, advantages and technical and industrial significance of embodiments of this invention will be better understood by reading the following detailed description of presently preferred embodiments of the invention, when considered in connection with the accompanying drawings.

### BRIEF DESCRIPTION OF THE DRAWINGS

Preferred features of the present invention will now be described, purely by way of example, with reference to the accompanying drawings, in which:
Fig. 1 is an illustrative diagram of an overview and characteristics of a recording apparatus according to a first embodiment of the present invention;
Fig. 2 is a block diagram of the recording apparatus according to the first embodiment;
Fig. 3 is an illustrative diagram of basic patterns on a disk included in the recording apparatus shown in Fig. 2;
Fig. 4 is an illustrative diagram of exemplary linear patterns used in the recording apparatus shown in Fig. 2;
Fig. 5 is an illustrative diagram of transmission and reception of data performed between a write clock generator and a controller shown in Fig. 2;
Fig. 6 is a block diagram of the write clock generator shown in Fig. 2;
Fig. 7 is an illustrative diagram of a synchronizing operation performed by the write clock generator shown in Fig. 2;
Fig. 8 is a flowchart of a process performed by the write clock generator shown in Fig. 2;
Fig. 9 is an illustrative diagram of exemplary linear patterns used in the recording apparatus according to a second embodiment of the present invention;
Fig. 10 is an illustrative diagram of another exemplary linear patterns used in the recording apparatus according to the second embodiment;
Fig. 11 is an illustrative diagram of still another exemplary linear patterns used in the recording apparatus according to the second embodiment;
Fig. 12 is an illustrative diagram of still another exemplary linear patterns used in the recording apparatus according to the second embodiment;
Fig. 13 is an illustrative diagram of still another exemplary linear patterns used in the recording apparatus according to the second embodiment;
Fig. 14 is an illustrative diagram of a conventional technology;
Fig. 15 is another illustrative diagram of a conventional technology; and
Fig. 16 is still another illustrative diagram of a conventional technology.

### DETAILED DESCRIPTION OF THE PREFERRED EMBODIMENTS

Embodiments of a clock generating apparatus, a magnetic disk apparatus, and a write synchronizing method according to the present invention will be now explained with reference to the attached drawings.

### First Embodiment

To begin with, an overview and characteristics of a recording apparatus according to a first embodiment of the present invention will be described. Then, a structure of the recording apparatus and a flow of processes performed therein will be explained. Finally, advantages of the first embodiment will be described. Moreover, the term "recording apparatus" hereinafter means an apparatus mainly including: a disk that records data; a head that reads or writes data from or to the disk; a voice coil motor (VCM) that moves the head to a predetermined position; and a controlling circuit that controls the elements as listed above.

### Overview and Characteristics of Recording Apparatus According to First Embodiment

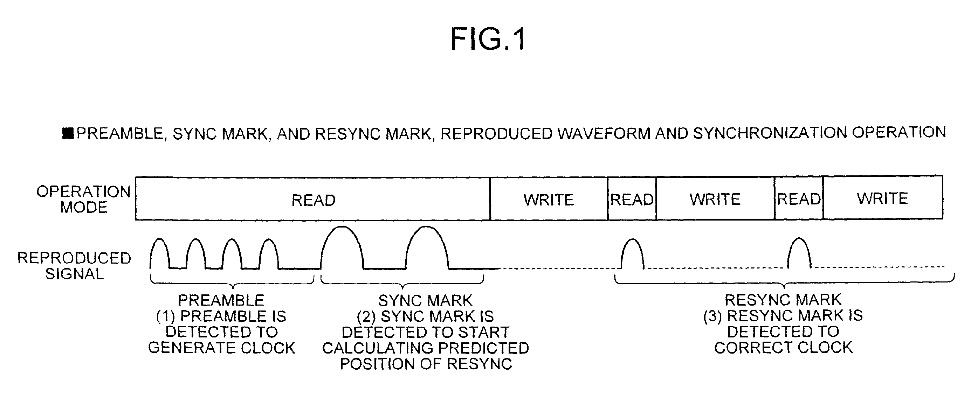

To begin with, the overview and the characteristics of the recording apparatus according to the first embodiment will be now explained with reference to Fig. 1. Fig. 1 is an illustrative diagram of the overview and the characteristics of the recording apparatus according to the first embodiment.

In a recording apparatus 1 according to the first embodiment, a plurality of record-reproducing magnetized areas, which are isolated from each other, are arranged on a track of a magnetic disk. A clock is generated in synchronization with timing when a head thereof comes above the magnetized area. The main characteristics of the recording apparatus 1 are in its capabilities to handle the frequency change within a sector, and to achieve synchronization at a high speed.

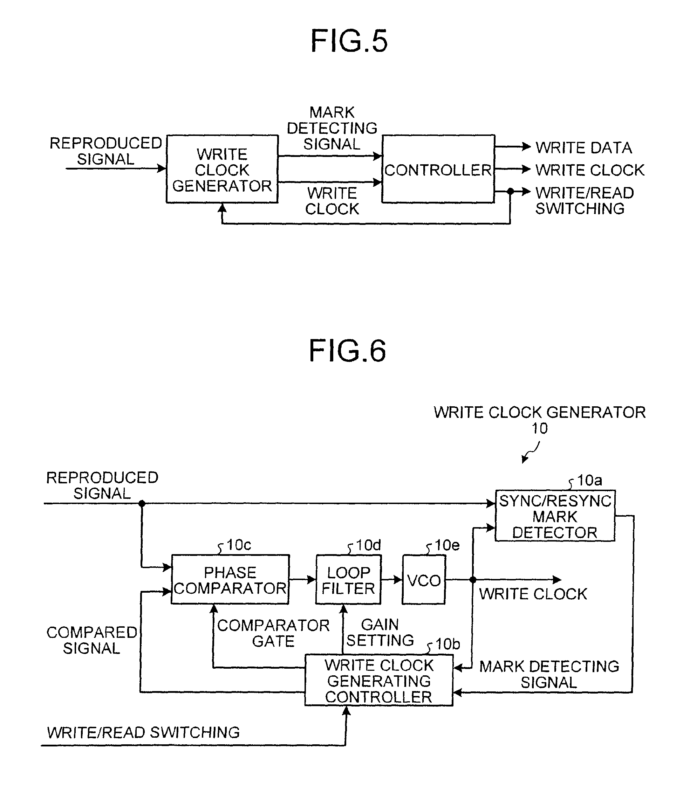

To explain these main characteristics more specifically, the recording apparatus 1 detects a preamble, which is a series of patterns formed on the track, and generates a clock based on the preamble, as shown in Fig. 1 (see (1) in Fig. 1). Specifically, upon detecting a preamble, the recording apparatus 1 generates a clock, and starts a phase locked loop (PLL) synchronization. A PLL synchronization herein means to detect a phase difference between an output signal (compared signal) and an input signal (reproduced signal), and to send a signal at the synchronized frequency as a write clock. (The PLL synchronization will be described in further details with reference to Fig. 6.)

The recording apparatus 1 detects a Sync mark that is a predetermined pattern formed between the preamble and a Resync mark, calculates a predicted position of the next Resync, and switches a PLL gain to a lower level (see (2) in Fig. 1). More specifically, upon detecting a Sync mark, the recording apparatus 1 predicts the position of the next Resync, switches from write to read at the predicted position, and switches the PLL gain to the lower level.

The recording apparatus 1 then detects the Resync mark that is a pattern of one or more pulse, and corrects the generated clock based on the Resync mark (see (3) in Fig. 1). Specifically, upon detecting Resync mark, the recording apparatus 1 compares the timing of the Resync position predicted by the calculation with the timing at which the Resync mark is detected, obtains a phase difference, and corrects the write clock based on the phase difference.

In the manner described above, the recording apparatus 1 generates a clock based on a preamble, and detects a Resync mark, and corrects the generated clock. As a result, as mentioned above as the main characteristics, it is possible to handle the frequency change within a sector, and to achieve synchronization at a high speed.

### Structure of Recording Apparatus

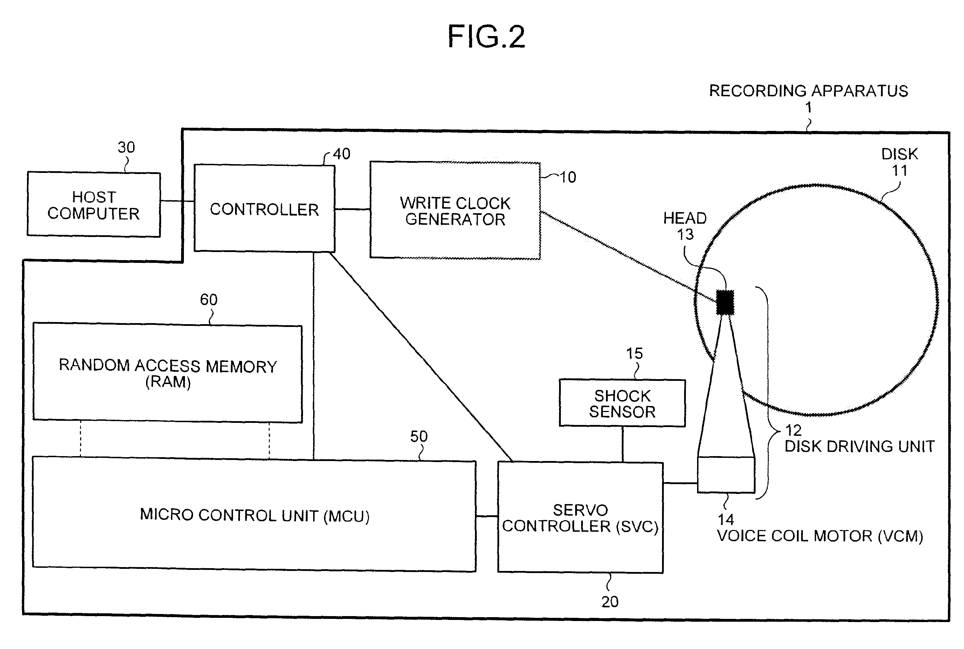

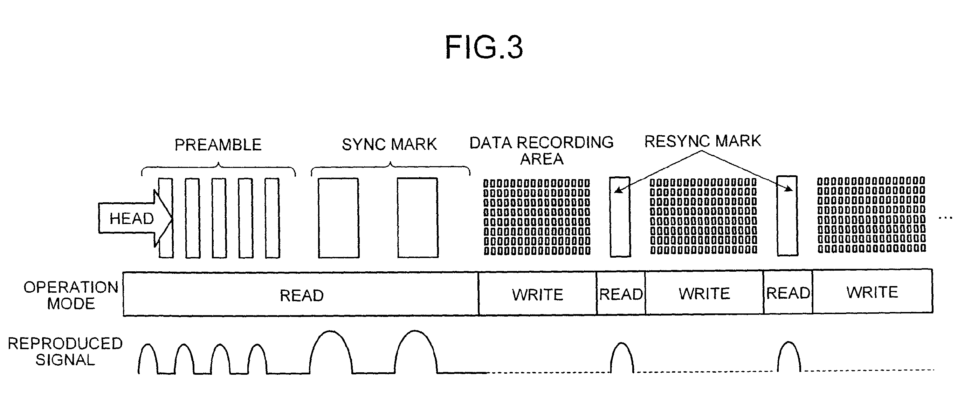

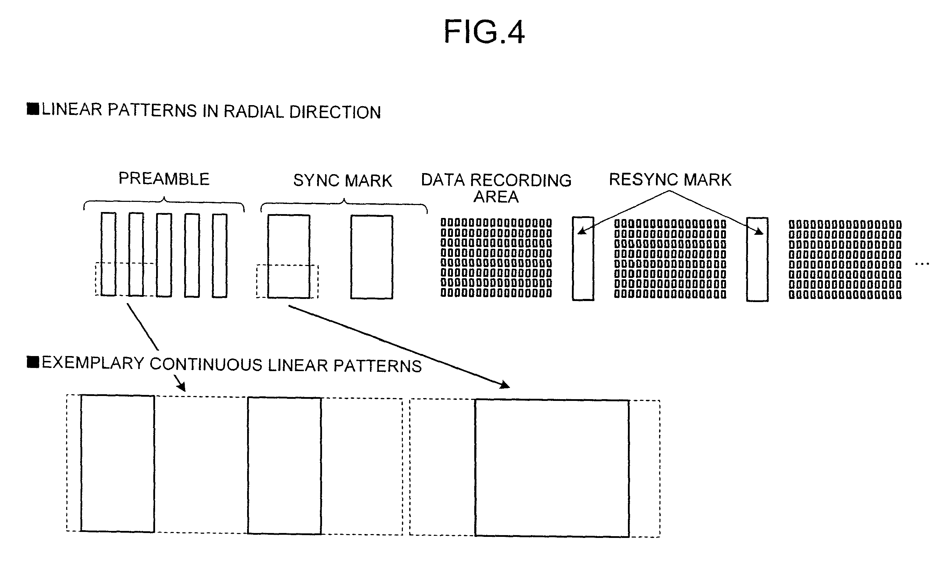

A structure of the recording apparatus 1, shown in Fig. 1, will be now explained with reference to Figs. 2 to 5. Fig. 2 is a block diagram of the recording apparatus 1 according to the first embodiment. Fig. 3 is an illustrative diagram of basic patterns of a disk included in the recording apparatus 1 according to the first embodiment. Fig. 4 is an illustrative diagram of exemplary linear patterns of the recording apparatus 1 according to the first embodiment. Fig. 5 is an illustrative diagram of data transmission and reception performed in a write clock generator and a controller.

As shown in Fig. 2, the recording apparatus 1 according to the first embodiment mainly includes a write clock generator 10, a disk 11, a disk driving unit 12, a shock sensor 15, a servo controller (SVC) 20, a controller 40, a micro control unit (MCU) 50, and a random access memory (RAM) 60. The write clock generator 10 included in the recording apparatus 1 according to the first embodiment is applied to a read channel (RDC), which is not shown.

On the disk 11, there are island-like magnetized areas, which are isolated from each other, for reproducing the record. Backgrounds are not magnetized, and the data is recorded by using the magnetized area as a data recording area. Specifically, the disk 11 is a disk-shaped metal or glass substrate, and a magnetic film is formed thereon, to record data using the magnetism.

A basic pattern on the disk 11 will be now explained with reference to Figs. 3 and 4. As shown in Fig. 3, a preamble, which is a series of patterns, is arranged at the beginning of a sector on a track, and a Sync mark, which is a predetermined pattern distinguishing the preamble from the recorded data, follows the preamble. The data recording areas (that is, the magnetized areas) and Resync marks are arranged subsequently, in an alternating manner.

Moreover, as shown in Fig. 4, considering the different positions of a write head and a read head, the marks are formed as continuous linear patterns extending in a radial direction. A write and a read are switched based on these synchronization patterns. In a method for generating these patterns, the entire surface of the disk 11, which has such magnetized areas, is DC erased, to align the direction of the magnetization. In this manner, a reproduced signal of 0-p amplitude is obtained. If the data recording areas need to be AC erased, only the data areas are AC erased after the write synchronization patterns are generated.

Going back to the explanation of Fig. 2, the disk driving unit 12 is responsible for reading and writing data onto the disk 11, and includes elements such as a head 13 and a voice coil motor (VCM) 14. The head 13 writes or reads the data to or from the disk 11. Specifically, the head 13 includes an element that converts the magnetism into electrical signals. The head 13 has a write head for writing the data, and a read head for reading the data, at different positions from each other. The head 13 is kept lifted above the turning disk 11 while reading and writing the data thereon or therefrom. For example, the head 13 reads the data that are recorded magnetically on the disk 11, converts the data into an electrical signal, and sends the converted signal to the write clock generator 10 via a head amplifier, which is not shown.

For the head 13 to read or write data at a predetermined position on the disk 11, the recording apparatus 1 needs to perform a positioning control so that the head 13 is brought to a predetermined position on the disk 11. Such a positioning control for the head 13 is realized by the voice coil motor 14, the servo controller 20, and the micro control unit 50.

The voice coil motor 14 controls positioning of the head 13. Specifically, the voice coil motor 14 is a motor that activates the disk driving unit 12, and controls the positioning of the head 13 by rotating the motor. The voice coil motor 14 is connected to the servo controller 20, and controlled thereby.

The shock sensor 15 detects a vibration in the recording apparatus 1. Specifically, the shock sensor 15 is made from a piezoelectric element, and electrically detects a vibration generated in the recording apparatus 1 by converting the vibration into a voltage by means of a piezoelectric effect thereof. The shock sensor 15 is connected to the servo controller 20, and sends information regarding the vibration that is detected in the recording apparatus 1 to the servo controller 20.

The servo controller 20 is a unit that drives a spindle motor (SPM), which is not shown, and the voice coil motor 14. Specifically, the servo controller 20 has a power circuit for driving the spindle motor, which is a motor for rotating the disk 11, and another power circuit for driving the voice coil motor 14, which is a motor for controlling the positioning of the head 13. The servo controller 20 is connected to the spindle motor, which is not shown, the voice coil motor 14, the shock sensor 15, the controller 40, and the micro control unit 50.

The micro control unit 50 is a unit that mainly controls the entire recording apparatus 1, and the positioning of the head 13. Specifically, the micro control unit 50 includes elements such as a central processing unit (CPU) and a read only memory (ROM), and is connected to the servo controller 20, the controller 40, and the random access memory 60.

The random access memory 60 is a unit that temporarily stores therein data in the recording apparatus 1. Specifically, the random access memory 60 is connected to the micro control unit 50, and temporarily stores therein the data to be used in the micro control unit 50.

The write clock generator 10 generates a write clock based on the signal read from the disk 11. The write clock generator 10 operates with the read channel that has a circuit for performing signal processing for the data, and another circuit for taking out disk position information from servo control data. The write clock generator 10 is connected to the head 13 and the controller 40. (The write clock generator 10 is connected to the head 13 via the head amplifier not shown.) Explanations that are closely related to the present invention will be described later in detail with reference to Fig. 6.

The controller 40 (for example, a hard disk controller) mainly controls interfacing between a host computer 30 and the recording apparatus 1, and between each of the elements included in the recording apparatus 1. Specifically, the controller 40 includes an error correcting circuit for correcting an error of the data transferred between the host computer 30 and the recording apparatus 1, and an interface controlling circuit for controlling the interface between the host computer 30 and the recording apparatus 1, and the interface between the write clock generator 10 and the micro control unit 50. The controller 40 is connected to the host computer 30, the servo controller 20, the write clock generator 10, and the micro control unit 50.

The data transmission and reception performed between the write clock generator 10 and the controller 40 will be now explained with reference to Fig. 5. As shown in Fig. 5, the write clock generator 10 receives a reproduced signal from the read head of the head 13, and, upon detecting a Sync mark and a Resync mark, transmits a mark detecting signal to the controller 40. The write clock generator 10 also transmits a generated write clock to the controller 40.

The controller 40 transmits the write data received from the host computer 30, and the write clock received from the write clock generator 10 to the servo controller 20 and the micro control unit 50. The controller 40 also transmits a write/read switching signal to the write clock generator 10, the servo controller 20, and the micro control unit 50.

### Structure of Write Clock Generator

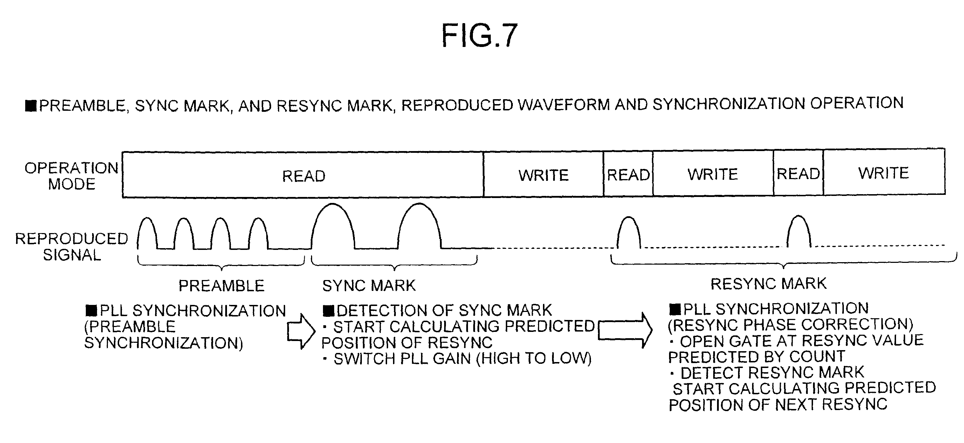

A structure of the write clock generator 10, shown in Fig. 2, will be now explained with reference to Fig. 6. Fig. 6 is a block diagram of the write clock generator 10 according to the first embodiment. Fig. 7 is an illustrative diagram of a synchronizing operation performed by the write clock generator 10.

As shown in Fig. 6, the write clock generator 10 includes a Sync/Resync mark detector 10a, a write clock generating controller 10b, a phase comparator 10c, a loop filter 10d, and a voltage controlled oscillator (VCO) 10e, and is connected to the head 13 and the controller 40. A process performed by each of these elements will be now explained.

The Sync/Resync mark detector 10a detects a Sync mark and a Resync mark. More specifically, the Sync/Resync mark detector 10a receives a reproduced signal from the head (read head) 13. If a Sync mark or a Resync mark is detected in the reproduced signal, the Sync/Resync mark detector 10a transmits a Sync mark detecting signal or a Resync mark detecting signal to the write clock generating controller 10b.

The write clock generating controller 10b calculates a predicted position of a Resync, and corrects the phase at the Resync mark. Specifically, upon receiving a Sync mark detecting signal from the Sync/Resync mark detector 10a, the write clock generating controller 10b starts an operation to calculate a predicted position of the next Resync mark. Upon receiving a Sync mark detecting signal from the Sync/Resync mark detector 10a, the write clock generating controller 10b sends a gain switching request to the loop filter 10d to switch the PLL gain to the lower level so as to enable a detection of a Resync mark.

The write clock generating controller 10b then opens a comparator gate of the phase comparator 10c, which is to be described later, at the calculated predicted position of the Resync mark. The write clock generating controller 10b causes the phase comparator 10c to compare the reproduced signal with the compared signal at this timing, and to output a phase difference thereof. Upon receiving a Resync mark detecting signal from the Sync/Resync mark detector 10a, the write clock generating controller 10b starts calculating a predicted position of the next Resync mark based on the write clock.

The phase comparator 10c outputs a phase difference between the two input signals. Specifically, the phase comparator 10c compares the reproduced signal received from the head (read head) 13 with the compared signal received from the write clock generating controller 10b, and outputs the phase difference between these two signals to the loop filter 10d.

The loop filter 10d converts the received phase difference to a voltage. Specifically, the loop filter 10d receives the phase difference from the phase comparator 10c, converts the received phase difference to a voltage, passes the voltage through a low-pass filter to suppress high frequency components and to extract the low frequency components of the electrical signal, and outputs the voltage to the VCO 10e.

The VCO 10e controls the frequency of an output voltage depending on the voltage input thereto. Specifically, the VCO 10e receives a voltage from the loop filter 10d, controls the frequency at the received voltage to generate a write clock, and outputs the generated write clock to the Sync/Resync mark detector 10a and the write clock generating controller 10b.

A synchronization operation performed by the write clock generator 10 will be now explained in detail with reference to Fig. 7. As shown in Fig. 7, upon detecting a preamble in the reproduced signal, the write clock generator 10 generates a clock, and starts the PLL synchronization. Upon detecting a Sync mark in the reproduced signal, the write clock generator 10 starts calculating the predicted position of the next Resync, and switches the PLL gain to the lower level. Upon detecting a Resync mark, the write clock generator 10 opens a comparator gate at the calculated predicted position of the Resync. The write clock generator 10 calculates a phase difference between the reproduced signal and the compared signal, corrects the write clock based on the phase difference, and calculates the predicted position of the next Resync.

### Process Performed by Write Clock Generator

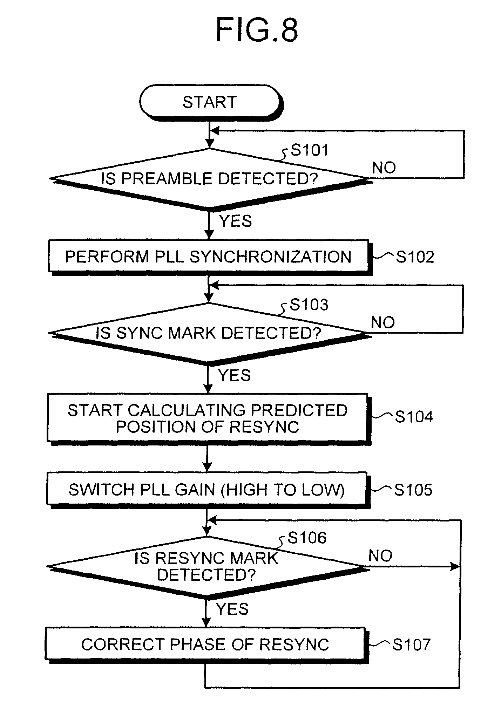

A process performed by the write clock generator 10 according to the first embodiment will be now explained with reference to Fig. 8. Fig. 8 is a flowchart of the process performed by the write clock generator 10 according to the first embodiment.

As shown in Fig. 8, if a preamble is detected (Yes at Step S101), the write clock generator 10 generates a clock and starts the PLL synchronization (Step S102). If a Sync mark is detected (Step S103), the write clock generator 10 calculates a predicted position of the next Resync (Step S104), and switches from write to read at the calculated predicted position. The write clock generator 10 then switches the PLL gain to the lower level so as to enable detection of the Resync mark (Step S105).

If a Resync mark is detected (Step S106), the write clock generator 10 compares the timing of the calculated predicted position of the Resync mark with the timing at which the Resync mark is detected, and corrects the clock (Step S107). The write clock generator 10 repeats this operation of detecting a Resync mark and correcting the clock (Steps S106 and S107).

### Advantages of First Embodiment

As described above, the recording apparatus 1 generates a clock from a preamble that is a series of patterns, enabling the synchronization at a high speed. At the same time, the recording apparatus 1 detects a Resync mark that is a pattern of one or more pulse, and corrects the generated clock. Therefore, the recording apparatus 1 can advantageously handle a frequency change within a sector. Because the recording apparatus 1 can handle the frequency change (phase error) within a sector and enables the synchronization at a high speed, it is advantageously possible to provide a magnetic disk apparatus that can perform recording at a high speed and a high precision.

Furthermore, according to the first embodiment, upon detection of a Sync mark, the predicted position of a Resync mark is calculated based on the Sync mark. Upon detection of a Resync mark, the predicted position of the Resync mark is compared with the timing at which the Resync mark is detected, and the clock is corrected. Therefore, it is advantageously possible to handle the frequency change within a sector more appropriately.

Still furthermore, the gain is switched upon detection of a Sync mark. Therefore, advantageously, a Resync mark can be detected appropriately.

### Second Embodiment

Although the first embodiment is described above, the present invention may be implemented according to any embodiments other than the one described above. Thus, another embodiment of the present invention will be explained below, as a second embodiment.

### (1) Linear Patterns

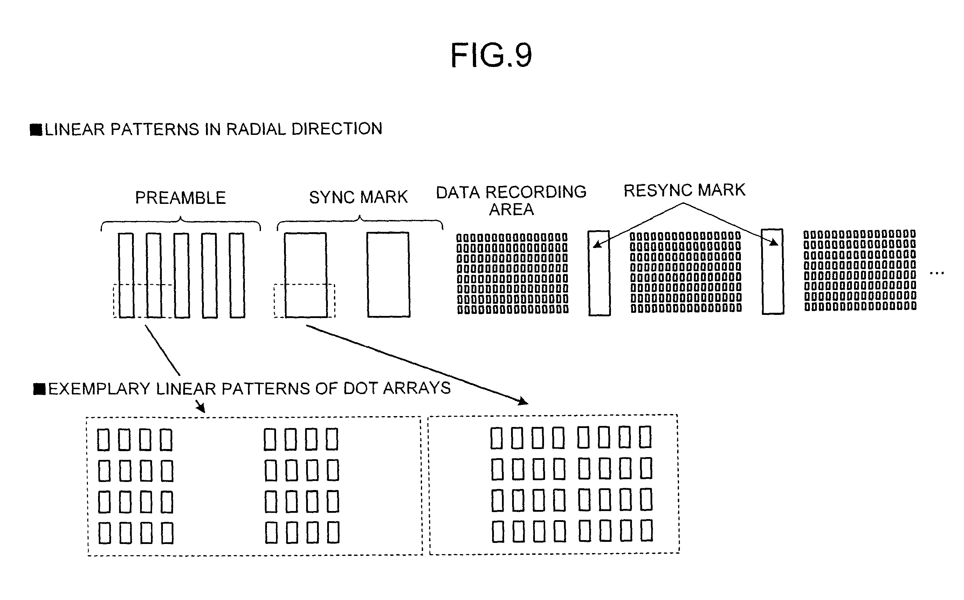

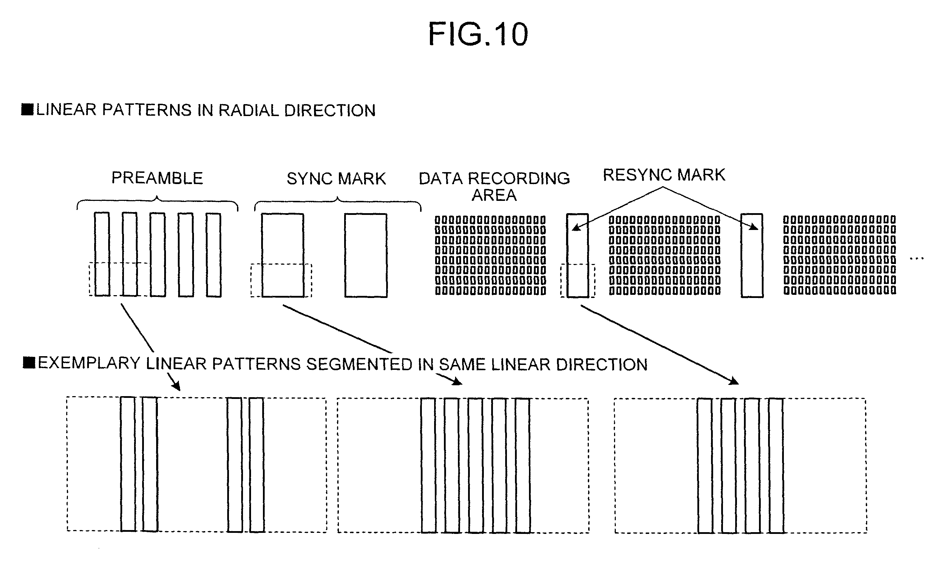

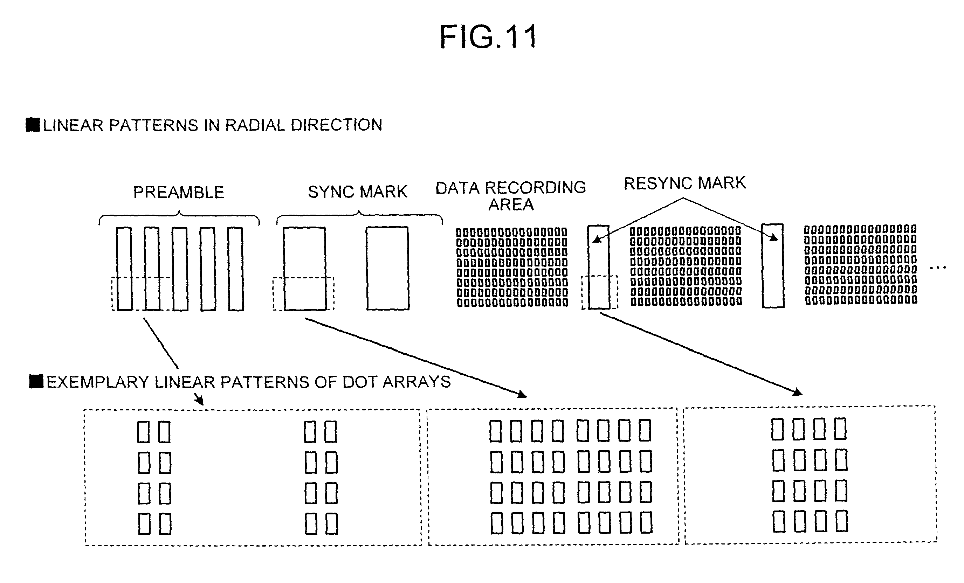

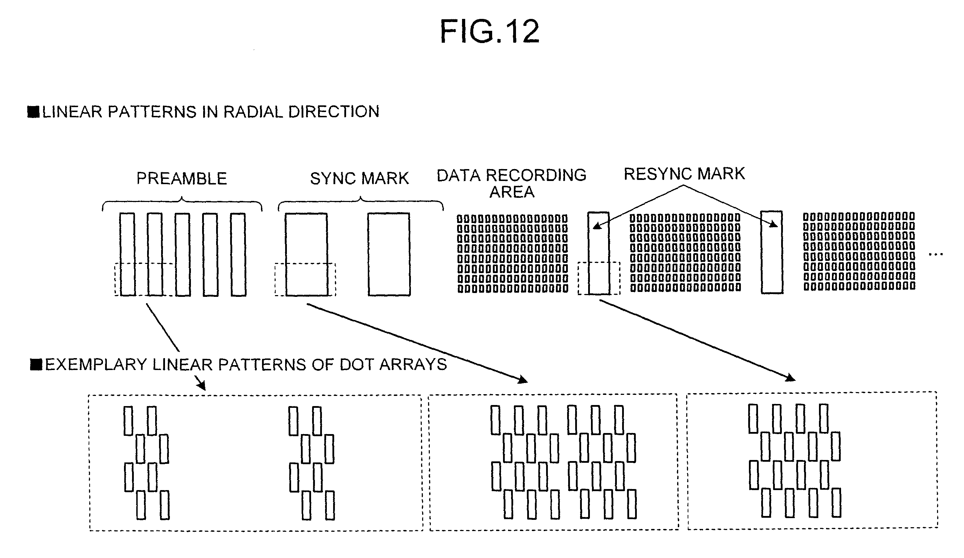

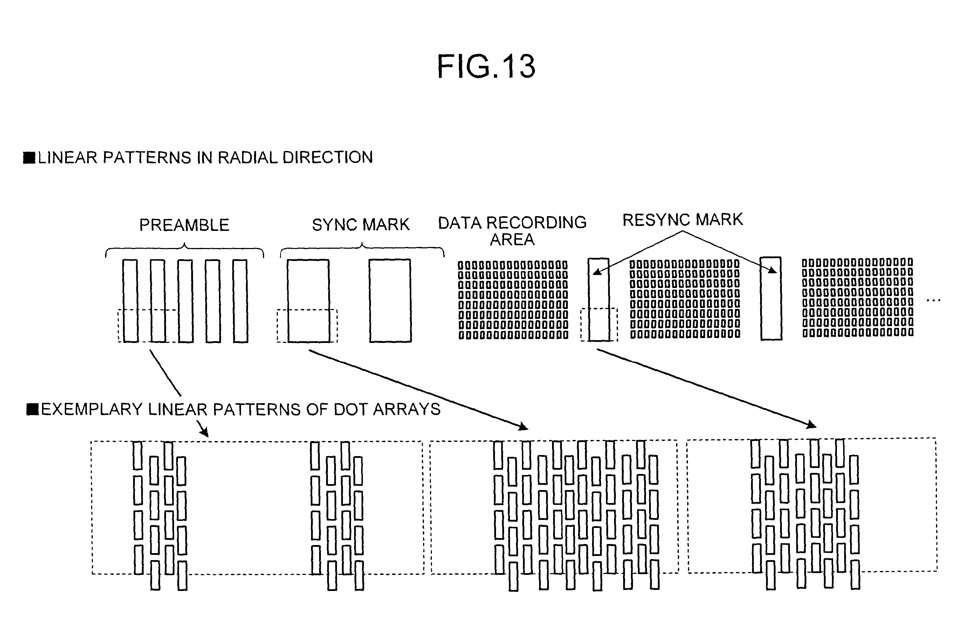

According to the first embodiment, the marks are formed on the disk 11 as continuous linear patterns extending in a radial direction. However, the present invention is not limited to such an arrangement, and such linear patterns may include arrays of dots. For example, as shown in Figs. 9 to 13, the marks may be made of dot arrays, or the linear patterns may be segmented in a same linear direction.

### (2) System Structure, etc.

Each of the elements included in the recording apparatus 1 shown in Fig. 2 is a functional conceptual illustration, and the recording apparatus 1 is not required to have the structure illustrated therein. In other words, a specific form of a distributions/integration of the recording apparatus 1 is not limited to the one shown in Fig. 1. For example, all or any part of the elements may be functionally or physically distributed or integrated in a given unit depending on various loads or usage conditions, such as integrating the write clock generator 10 and the controller 40. Furthermore, all or any part of the processing functions executed by the write clock generator in the recording apparatus 1 may be implemented as a program whose analysis is executed by a microprocessor unit (MPU), an MCU, or a CPU, or as hardware that is a wired logic.

According to an aspect of embodiments of the present invention, because the apparatus disclosed herein generates a clock based on a series of patterns (for example, a preamble), synchronization can be achieved at a high speed. Furthermore, because the apparatus can correct the generated clock by detecting a pattern of one or more pulse (for example, a Resync mark), it is possible to handle the frequency change within a sector. Still furthermore, because the frequency change within a sector is handled and the synchronization is achieved at a high speed, it is advantageously possible to provide a magnetic disk apparatus that can perform recording at a high speed and a high precision.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A clock generating apparatus generating a clock in synchronization with a timing at which a head comes above magnetized areas arranged isolated from each other on a track of a magnetic disk for reproducing a record, comprising:
a clock generating unit that detects a series of patterns formed on the track, and generates the clock based on the series of patterns; and
a clock correcting unit that detects a pattern of one or more pulse formed on the track in predetermined intervals, and corrects the clock generated by the clock generating unit, based on the pattern of one or more pulse.

2. The clock generating apparatus according to claim 1, further comprising:
a predicted position calculating unit that detects a predetermined pattern formed between the series of patterns and the pattern of one or more pulse on the track, and calculates a predicted position of the pattern of one or more pulse based on the predetermined pattern, wherein
the clock correcting unit detects the pattern of one or more pulse, compares a timing at which the pattern of one or more pulse is detected with a timing of the predicted position calculated by the predicted position calculating unit, and correct the clock.

3. The clock generating apparatus according to claim 1 or 2, further comprising a gain switching unit that switches a gain when the predetermined pattern is detected.

4. The clock generating apparatus according to any of the preceding claims, further comprising a pattern forming unit that forms each of the patterns by performing a DC erase to an entire surface of the magnetic disk having the magnetized areas to align a direction of magnetization.

5. A magnetic disk apparatus generating a clock in synchronization with a timing at which a head comes above magnetized areas arranged isolated from each other on a track of a magnetic disk for reproducing a record, comprising:
a clock generating unit that detects a series of patterns formed on the track, and generates the clock based on the series of patterns; and
a clock correcting unit that detects a pattern of one or more pulse formed on the track in predetermined intervals, and corrects the clock generated by the clock generating unit, based on the pattern of one or more pulse.

6. The magnetic disk apparatus according to claim 5, further comprising:
a predicted position calculating unit that detects a predetermined pattern formed between the series of patterns and the pattern of one or more pulse on the track, and calculates a predicted position of the pattern of one or more pulse based on the predetermined pattern, wherein
the clock correcting unit detects the pattern of one or more pulse, compares a timing at which the pattern of one or more pulse is detected with a timing of the predicted position calculated by the predicted position calculating unit, and correct the clock.

7. The magnetic disk apparatus according to claim 5 or 6, further comprising a gain switching unit that switches a gain when the predetermined pattern is detected.

8. The clock generating apparatus according to any of claims 5 to 7, further comprising a pattern forming unit that forms each of the patterns by performing a DC erase to an entire surface of the magnetic disk having the magnetized areas to align a direction of magnetization.

9. A write synchronization method for synchronizing a timing at which a head comes above magnetized areas arranged isolated from each other on a track of a magnetic disk for reproducing a record, comprising:
firstly detecting a series of patterns formed on the track to generate the clock based on the series of patterns; and
secondly detecting a pattern of one or more pulse formed on the track in predetermined intervals to correct the clock generated in the firstly detecting based on the pattern of one or more pulse.

10. The write synchronization method according to claim 9 further comprising:
thirdly detecting a predetermined pattern formed between the series of patterns and the pattern of one or more pulse on the track, to calculate a predicted position of the pattern of one or more pulse based on the predetermined pattern, wherein
in the secondly detecting, a timing at which the pattern of one or more pulse is detected is compared with a timing of the predicted position calculated in the thirdly detecting for correcting the clock.

11. The write synchronization method according to claim 9 or 10, further comprising
switching a gain when the predetermined pattern is detected.
